# EUROPÄISCHE PATENTSCHRIFT

(11) **EP 1 858 679 B1**
(45) Veröffentlichungstag und Bekanntmachung des Hinweises auf die Patenterteilung: **24.12.2008**
(21) Anmeldenummer: 06725115.7
(22) Anmeldetag: 16.03.2006
(51) Int. Cl.: B27M 3/18, B27G 11/00

(54) **BAUTEIL MIT EINEM HOLZWERKSTOFFELEMENT UND EINEM DAMIT VERKLEBTEN BESCHLAGELEMENT SOWIE VERFAHREN ZUR HERSTELLUNG DES BAUTEILS**
COMPONENT COMPRISING A DERIVED TIMBER PRODUCT, MOUNTING STUCK THERETO, AND METHOD FOR PRODUCING SAID COMPONENT
COMPOSANT COMPORTANT UN ELEMENT REALISE DANS UN MATERIAU DERIVE DU BOIS ET UNE FERRURE COLLEE A L'ELEMENT PRECEDENT; PROCEDE DE PRODUCTION DE CE COMPOSE

(30) Priorität: 16.03.2005 DE 102005012521
(43) Veröffentlichungstag der Anmeldung: 28.11.2007
(73) Patentinhaber: Fritz Egger GmbH & Co., 3105 Unterradlberg (AT)
(72) Erfinder: RIEPERTINGER, Manfred, 83093 Bad Endorf (DE)
(74) Vertreter: Cohausz & Florack
(86) Internationale Anmeldenummer: PCT/EP2006/060812
(87) Internationale Veröffentlichungsnummer: WO 2006/097518

(56) Entgegenhaltungen:
- EP-A- 1 362 968
- PATENT ABSTRACTS OF JAPAN Bd. 1997, Nr. 04, 30. April 1997 (1997-04-30) -& JP 08 333946 A (YAMASHITA SUSUMU), 17. Dezember 1996 (1996-12-17)
- PATENT ABSTRACTS OF JAPAN Bd. 1995, Nr. 02, 31. März 1995 (1995-03-31) -& JP 06 307149 A (MATSUSHITA ELECTRIC IND CO LTD), 1. November 1994 (1994-11-01)

## Beschreibung

Die Erfindung betrifft ein Beschlagelement sowie ein Bauteil bestehend aus einem Holzwerkstoffelement und einem damit verklebten Beschlagelement. Ebenso betrifft die Erfindung ein Verfahren zum Verkleben eines Beschlagelementes mit einem Holzwerkstoffelement.

Im Rahmen der Beschreibung der Erfindung wird der Begriff Holzwerkstoffelement so verstanden, dass das Element aus natürlichem Holz bzw. aus Einzelelementen aus natürlichem Holz oder aus einem aus Holz hergestellten Material besteht. Elemente, die aus Holz bestehenden Einzelelementen hergestellt sind, können bspw. Tischlerplatten sein. Materialien, die aus Holz hergestellt werden, können mitteldichte Faserplatten (MDF), hochdichte Faserplatten (HDF), Hartfaserplatten, Spanplatten oder auch Oriented Strand Board (OSB) Platten sein.

Aus dem Stand der Technik ist es bekannt Holzwerkstoffelemente aufweisende Bauteile mit aus Metallen bestehenden Beschlägen wie Griffen oder Scharnieren zu versehen. Dieses ist insbesondere bei Möbelteilen oder auch bei Türen bekannt. Dazu werden in aller Regel mechanische Befestigungsmittel verwendet, insbesondere werden die Beschläge mittels Schrauben an der Oberfläche des Holzwerkstoffelements befestigt.

Es gibt jedoch Bauteile, die nicht aus einer massiven Schicht aus Holzwerkstoff bestehen, sondern nur eine Holzwerkstoffschicht mit geringer Dicke aufweisen, die ein Verschrauben erschweren oder unmöglich machen. In diesen Fällen müssen die Beschlagelemente in anderer Weise befestigt, insbesondere mit dem Bauteil verklebt werden.

Ein Verkleben stellt jedoch einen aufwändigen Verfahrensschritt dar, insbesondere das Auftragen und Aushärten des Klebstoffes sowie das Positionieren des Beschlagelementes relativ zum Holzwerkstoffelement stellen aufwändige Verfahrensschritte dar. Insbesondere die Anwendung von durch Wärmeenergie aktivierbaren Klebstoffen ist wegen der für die Verarbeitung erforderlichen Wärmeenergie problematisch, da sich jeder Holzwerkstoff bei zu großer Erwärmung farblich verändert, verkohlt oder anderweitig umgesetzt wird.

Der Erfindung liegt daher das technische Problem zugrunde, ein Verfahren und ein Bauteil der eingangs genannten Art zu verbessern, so dass das Verkleben mit einem thermisch zu aktivierenden Klebstoff vereinfacht und gleichzeitig die Qualität der Klebeverbindung verbessert werden kann.

Das zuvor aufgezeigte technische Problem wird durch ein Verfahren zum Verkleben eines Beschlagelementes mit einem Holzwerkstoffelement nach Anspruch 1 gelöst, bei dem die Fügefläche des Beschlagelements zumindest teilweise mit einem Klebstoff versehen wird, bei dem die Fügefläche des Beschlagelements mit dem Holzwerkstoffelement in Kontakt gebracht wird, bei dem vor oder nach dem Inkontaktbringen mittels magnetischer Induktion Wärmeenergie im Beschlagelement oder im Klebstoff erzeugt wird, bei dem der Klebstoff durch die Wärmeenergie erwärmt und aktiviert wird und bei dem durch den aushärtenden Klebstoff eine Klebeverbindung zwischen dem Beschlagelement und dem Holzwerkstoffelement erzeugt wird.

Das Verfahren ist insbesondere dadurch vorteilhaft, dass das Beschlagelement in einem ersten Schritt, ggf. auch zeitlich weit vor dem Verkleben mit dem Holzwerkstoffelement, mit dem Klebstoff versehen wird. Im abgekühlten Zustand weist der Klebstoff ohne zusätzliches Erwärmen keine oder nur eine geringe Klebewirkung auf. Erst dann, wenn die Fügefläche mit dem Klebstoff mit der Oberfläche des Holzwerkstoffelements in Kontakt gebracht wird oder worden ist, soll der Klebstoff die Klebekraft entwickeln.

Daher ergibt sich der Vorteil des Verfahrens insbesondere im industriellen Einsatz, da die Beschlagelemente werkseitig mit dem Klebstoff versehen werden können, um dann bei der Verarbeitung mit dem Holzwerkstoffelement nur noch lokal erwärmt werden zu müssen. Dabei ist es besonders vorteilhaft, dass nur das Beschlagelement oder nur der Klebstoff selber durch die Induktion erwärmt wird und nur in geringem Maße eine Erwärmung des Holzwerkstoffelements erfolgt.

Dazu wird entweder vor oder nach dem Inkontaktbringen das Beschlagelement oder der Klebstoff mit einer magnetischen Induktionsquelle erhitzt. Der Vorteil der magnetischen Induktion besteht darin, dass sich nur der elektrisch leitfähige Anteil des Beschlagelements oder des Klebstoffes selbst erwärmt, ohne dass eine Wärmestrahlung erzeugt werden muss. Daher wird im ersten Schritt durch die magnetische Induktion nur das Beschlagelement oder der Klebstoff und nicht das Holzwerkstoffelement erwärmt. Der Klebstoff wird dadurch aktiviert und entfaltet seine Klebekraft.

Über den Kontakt mit dem Klebstoff und zu einem geringen Teil auch durch Wärmestrahlung ausgehend vom Beschlagelement oder ausgehend vom Klebstoff wird auch Wärme auf den Holzwerkstoff übertragen, jedoch werden dabei keine Temperaturgrenzen überschritten, so dass es zu einem Verfärben, Verbrennen oder Verkohlen des Holzwerkstoffes kommen kann. Das Abkühlen des Klebstoffes erfolgt nach dem kurzzeitigen Erhitzen wiederum so schnell, dass sich die gesamte auf den Holzwerkstoff übertragene Wärme nicht nachteilig auf das Holzwerkstoffelemeht auswirkt.

Die Induktionserwärmung eines elektrisch leitfähigen Körpers durch magnetische Induktion kann durch eine Vorrichtung durchgeführt werden, die mit Hilfe einer Spule, die mit Wechselstrom beaufschlagt wird, ein wechselndes Magnetfeld erzeugt, das in einem elektrisch leitendem Element einen Wechselstrom induziert. Dieser im Element induzierte Strom verursacht wegen des elektrischen Widerstandes eine Erwärmung des Elements an den Stellen des Stromflusses. Die so erzeugte Wärme entsteht sofort und unmittelbar im Element selbst, bzw. in dessen Inneren, muss also nicht durch Wärmeleitung dorthin geleitet werden.

Nichtleitende Materialien, also insbesondere Holzwerkstoffe der oben genannten Art, werden nicht durch die Induktion erwärmt. Des Weiteren lassen sich elektrisch gut leitende Materialien wie Aluminium oder Kupfer wegen des geringen elektrischen Widerstandes kaum erwärmen. Daher weisen Metalle, die sich gut für eine Induktionserwärmung eignen, einen großen elektrischen Widerstand auf.

Eine Vorrichtung, die zur Durchführung des Verfahrens geeignet ist, ist in der DE 203 00 624 U1 offenbart. Dabei handelt es sich um ein Handgerät, mit dem induktive Erwärmung durchgeführt werden kann. Selbstverständlich ist die Erfindung nicht auf die Anwendung von Handgeräten beschränkt. Im industriellen Einsatz, beispielsweise in der industriellen Möbelherstellung, können auch stationäre Vorrichtungen eingesetzt werden.

In besonders bevorzugter Weise besteht das Beschlagelement aus einem durch eine magnetische Induktion erwärmbaren Material und wird durch die magnetische Induktion erwärmt. Die im Beschlagelement entstehende Wärme wird dann auf den Klebstoff übertragen. Vorzugsweise besteht das Beschlagelement aus einem Metall, jedoch kann auch ein elektrisch leitfähiger Kunststoff oder ein elektrisch leitende Partikel enthaltender Kunststoff verwendet werden.

Ebenso ist es möglich, dass der Klebstoff elektrisch leitfähig ist und durch magnetische Induktion erwärmt wird. In diesem Fall wird die Wärmeenergie direkt im Klebstoff selbst erzeugt, also gerade dort, wo die Wärmeenergie für das Aktivieren und Aushärten des Klebstoffes benötigt wird.

Darüber hinaus ist es möglich, dass der an sich nicht elektrisch leitfähige Klebstoff elektrisch leitfähige.

Partikel enthält, die durch magnetische Induktion erwärmt werden. Beispielsweise können Metallpartikel oder Metallspäne im Klebstoff enthalten sein, die durch die magnetische Induktion erwärmt werden und dann die Wärmeenergie an den Klebstoff abgeben. Somit entsteht auch in diesem Fall die Wärme genau an der Stelle, wo sie für das Aktivieren und Aushärten des Klebstoffes benötigt wird.

Es gibt verschiedene Möglichkeiten für die Ausgestaltung des Klebstoffes. Die Anforderung an den Klebstoff besteht darin, dass der Klebstoff durch Zuführen von Wärmeenergie in einen aktivierten Zustand überführt wird, um anschließend nach einem Abkühlen in den klebenden und somit das Beschlagelement und das Holzwerkstoffelement verbindenden Zustand übergeht.

In bevorzugter weise besteht der Klebstoff aus einem Reaktionsklebstoff und wird vor dem Anbringen des Beschlagelements arm Holzwerkstoffelement zumindest teilweise vorvernetzt. Der Klebstoff wird dann nach der Erwärmung endausgehärtet. Bei Reaktionsklebstoffen unterschiedet man zwischen Polymerisationsklebstoffen, Polyadditionsklebstoffen und Polykondensationsklebstoffen. Die Reaktionsklebstoffe unterscheiden sich daher nach der Art der chemischen Reaktion.

Gemeinsam ist allen Arten, dass es darunter jeweils Reaktionsklebstoffe gibt, die bei Raumtemperatur nicht oder nur zu einem geringen Teil reagieren und erst nach Zufuhr von Wärmeenergie soweit erwärmt werden, dass die chemische Reaktion erfolgt. Diese Reaktionsklebstoffe werden auch warmhärtende oder heißhärtende Klebstoffe genannt. Bevorzugt sind dabei Reaktionsklebstoffe, die nur einen relativ geringen Temperaturanstieg benötigen, um die chemische Reaktion in Gang zu setzen. Daher sind warmhärtende Reaktionsklebstoffe besonders bevorzugt.

Bei einer weiteren Ausgestaltung des Verfahrens besteht der Klebstoff aus einem thermoplastischen Klebstoff und wird vor dem Anbringen des Beschlagelements am Holzwerkstoffelement zumindest teilweise verfestigt. Der Klebstoff wird dann mittels der Erwärmung zumindest teilweise aktiviert, insbesondere verflüssigt, so dass eine gute Verbindung mit der Oberfläche des Holzwerkstoffelementes entsteht und nach dem Abkühlen des Klebstoffes die Klebewirkung eintritt.

Bei einer weiteren bevorzugten Ausgestaltung des Verfahrens wird ein Klebstoff aus einem kombinierten Klebstoffsystem verwendet. Das Klebstoffsystem besteht zu einem Teil aus einem thermoplastischen Klebstoff und zu einem anderen Teil aus einem reaktiven Klebstoff. Solche Klebstoffsysteme sind auch als reactive hot melt (RHM) Klebstoffe bekannt.

Darüber hinaus kann die Oberfläche des Holzwerkstoffelements vor dem Anbringen des Beschlagelements durch Aufrauhen, Anschleifen, Glätten und/oder ein anderes Verfahren vorbehandelt werden und/oder ein Primer oder sonstige Produkte zur vorbehandlung der Oberfläche aufgetragen werden.

Insbesondere können etwaige Beschichtungen des Holzwerkstoffelements im zu verklebenden Bereich wie oben genannt vorbehandelt und/oder teilweise oder vollständig abgetragen werden.

Das zuvor aufgezeigte technische Problem wird auch durch ein Bauteil mit den Merkmalen des Anspruches 8 gelöst. Weitere bevorzugte Ausgestaltungen des Bauteils sind in den abhängigen Ansprüchen beschrieben.

Das erfindungsgemäße Bauteil weist mindestens ein Holzwerkstoffelement und mindestens ein mit dem Holzwerkstoffelement verbundenes Beschlagelement auf. Eine Klebstoffschicht ist zwischen dem Holzwerkstoffelement und dem Beschlagelement vorgesehen, wobei der Klebstoff das Beschlagelement mit dem Holzwerkstoffelement verbindet. Die Klebstoffschicht ist erfindungsgemäß zumindest teilweise elektrisch leitfähig.

Unter Beschlagelement wird dabei jedes Element verstanden, das mit dem Holzwerkstoffelement verbunden werden kann. Beispielsweise kann das Beschlagelement ein Scharnier, ein Griff, ein Haken, eine Öse, ein Schloss, ein Abschlussstück, vorzugsweise ein Tischfuß, oder auch ein Accessoire ohne eine bestimmte technische Funktion sein.

In bevorzugter Weise besteht das Beschlagelement zumindest teilweise aus einem elektrisch leitfähigen Material. Dadurch kann das Beschlagelement selbst durch die magnetische Induktion erwärmt werden. Als elektrisch leitfähige Materialien kommen bevorzugt Metalle in Frage. Ebenso können aber auch Kunststoffe eingesetzt werden, die entweder selbst elektrisch leitfähig sind oder eine Mehrzahl von elektrisch leitfähigen Partikeln aufweisen.

Darüber hinaus kann die Klebstoffschicht zumindest teilweise aus einem elektrisch leitfähigen Material bestehen. Zum einen kann die Leitfähigkeit der Klebstoffschicht durch einen elektrisch leitfähigen Klebstoff erzeugt werden. Zum anderen kann die Leitfähigkeit der Klebstoffschicht durch eine Mehrzahl von elektrisch leitfähigen Partikeln innerhalb des Klebstoffes erzeugt werden.

Besonders vorteilhaft kann die Erfindung bei Bauteilen eingesetzt werden, die als Leichtbauplatte mit oder ohne eine Rahmenkonstruktion ausgebildet sind, wobei das Holzwerkstoffelement mindestens eine äußere Abdeckplatte aufweist. Bei einem solchen Aufbau ist das Bauteil nicht so massiv aufgebaut, dass eine zuverlässige Verbindung des Beschlagelements mittels mechanischer Mittel wie Schrauben mit dem Holzwerkstoffelement hergestellt werden kann. Denn es ist nicht genügend festes Material im Bauteil enthalten, so dass die Schrauben eine feste Verbindung eingehen können. Des Weiteren ist es bevorzugt, dass das Holzwerkstoffelement eine unbehandelte Oberfläche aufweist. Somit kann eine gute und zuverlässige Verklebung mit der Oberfläche gewährleistet werden.

In einer weiteren Ausgestaltung der Erfindung weist die Oberfläche des Holzwerkstoffelements eine Beschichtung auf, insbesondere eine Lackschicht, eine Laminatschicht, eine Melaminharzbeschichtung, eine Furnierschicht, vorzugsweise geölt oder gewachst, oder eine Folienbeschichtung. In diesem Fall ist das Beschlagelement mit der Beschichtung verklebt. Eine wichtige Voraussetzung für eine dauerhafte Befestigung des Beschlagelements ist dann, dass die Beschichtung ein ausreichendes Haftvermögen aufweist; um die zu übertragenden Kräfte bzw. Spannungen auf das Holzwerkstoffelement übertragen zu können.

Alternativ können die oben genannten Beschichtungen auch vor dem Anbringen des Beschlagelements durch Aufrauhen, Anschleifen, Glätten und/oder ein anderes Verfahren vorbehandelt sein und/oder ein Primer oder sonstige Produkte zur Vorbehandlung aufgetragen sein. Insbesondere können die Beschichtungen im zu verklebenden Bereich teilweise oder vollständig abgetragen sein.

Selbstverständlich können alle zuvor genannten vorbehandlungen auch einzeln oder in Kombination an dem Holzwerkstoffelement an sich vorgenommen sein.

Im Folgenden wird das zuvor beschriebene Bauteil und ein typischer Verfahrensablauf anhand eines Ausführungsbeispiels sowie ein weiteres Ausführungsbeispiel näher erläutert, wobei auf die beigefügte Zeichnung Bezug genommen wird. In der Zeichnung zeigen
- Fig. 1: ein Holzwerkstoffelement in Leichtbauweise mit einem davon beabstandeten Beschlagelement,
- Fig. 2: das Holzwerkstoffelement in Kontakt mit dem Beschlagelement, wobei elektromagnetische Strahlung zur induktiven Erwärmung auf das Beschlagelement einwirkt,
- Fig. 3: das Holzwerkstoffelement mit dem damit verklebten Beschlagelement, wobei das Beschlagelement mit einem weiteren Element verschraubt ist und
- Fig. 4: eine alternative Ausführungsform eines Holzwerkstoffelements mit dem damit verklebten Beschlagelement, wobei das Beschlagelement mit einem weiteren Element ebenfalls erfindungsgemäß verklebt ist.

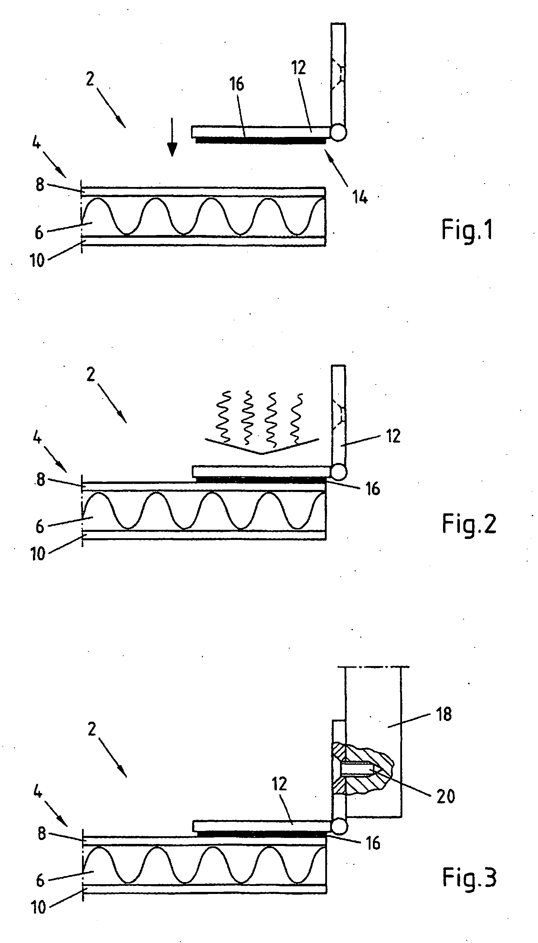

In den Fig. 1 bis 3 sind verschiedene Stadien des Verfahrensablaufes zur Herstellung eines erfindungsgemäßen Bauteils anhand eines bevorzugten Ausführungsbeispiels näher erläutert.

Das Bauteil 2 weist ein Holzwerkstoffelement 4 auf, das vorliegend als Leichtbauelement ausgebildet ist. Dazu ist eine Kernlage 6 vorgesehen, die zu beiden Seiten mit jeweils einer Holzwerkstoffplatte 8 und 10 abgedeckt ist. Die Kernlage besteht dabei beispielsweise aus einer wabenförmigen Struktur aus Pappe oder Aluminium. Die Holzwerkstoffplatten 8 und 10 sind dabei so dünn, dass ein Verschrauben eines Beschlagelements 12, das vorliegend als Scharnier ausgebildet ist, an einer der Holzwerkstoffplatten 8 und 10 nicht möglich ist.

Daher wird das Beschlagelement 12 mit der Oberfläche des oberen Holzwerkstoffelements 8 verklebt, wobei während des Verklebens erfindungsgemäß eine magnetische Induktion zum Erwärmen des Beschlagelements 12 eingesetzt wird. Dazu besteht das Beschlagelement 12 aus einem elektrisch leitfähigen Material, beispielsweise einem Metall.

Wie in Fig. 1 dargestellt ist, sind das Holzwerkstoffelement 4 und das Beschlagelement 12 zunächst beabstandet voneinander angeordnet. An der nach unten weisenden Fügefläche 14 des Beschlagelements 12 ist eine Schicht 16 aus einem Klebstoff angeordnet, der formstabil ist und nur wenig oder gar nicht klebend wirkt.

Wie mit dem Pfeil in Fig. 1 angedeutet ist, wird das Beschlagelement 12 in Kontakt mit der Oberfläche des Holzwerkstoffelements 4 gebracht.

Wie Fig. 2 zeigt, wird anschließend das Beschlagelement 12 mit elektromagnetischer Strahlung beaufschlagt, die zu einer induktiven Erwärmung des Beschlagelements 12 zumindest im Bereich der Fügefläche 14 führt. Durch diese lokal entstehende Wärme wird der Klebstoff aktiviert, so dass er erneut seine Klebekraft entfalten kann. Die elektromagnetische Strahlung ist in Fig. 2 mit Wellenlinien und einer breiten Pfeilspitze dargestellt.

Nicht in Fig. 2 dargestellt ist eine Vorrichtung zum Erzeugen der elektromagnetischen Strahlung, da es bei der vorliegenden Erfindung nicht auf die Art der Vorrichtung ankommt. Es können Handgeräte oder stationäre Vorrichtungen eingesetzt werden. Mit anderen Worten kann das erfindungsgemäße Verfahren sowohl im industriellen und automatisierten Maßstab als auch in einer Einzelfertigung angewendet werden.

Fig. 3 zeigt dann das Bauteil mit endausgehärtetem Zustand, in dem das Holzwerkstoffelement 4 fest mit dem Beschlagelement 12 verklebt ist. Des Weiteren zeigt Fig. 3, dass das Beschlagelement 12 an anderer Stelle mittels einer herkömmlichen Schraubverbindung mit einem anderen Element 18 mit Hilfe einer Schraube 20 verbunden ist.

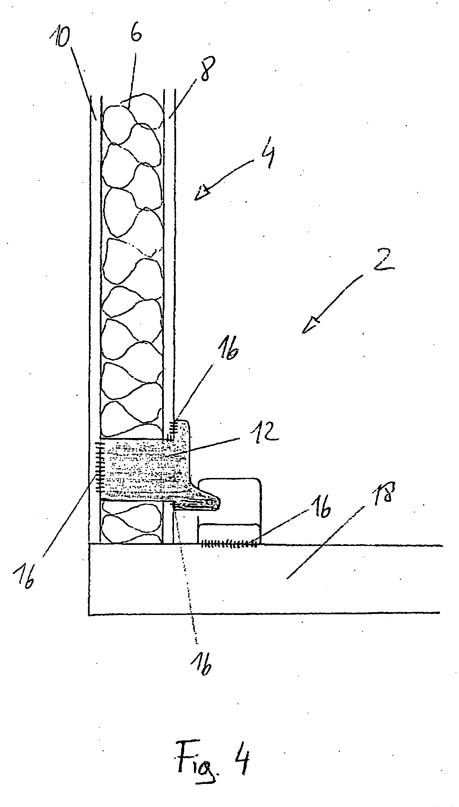

Fig. 4 zeigt ein alternatives Ausführungsbeispiel des Holzwerkstoffelements 4 mit einem verklebten Beschlagelement 12. Die Holzwerkstoffplatte 8 sowie die Kernlage 6 sind in einem Bereich, der an den Umfang des Beschlagelemts 12 angepasst ist, ausgenommen. Das Beschlagelements 12 ist über Schichten 16 mit der Holzwerkstoffplatte 10 und 8 verklebt. Dabei wurde dem zuvor beschriebenen Verfahren entsprechend vorgegangen.

Insbesondere durch Anpassen der Dicke des Beschlagelements 12 lässt sich die äußere Oberfläche des Beschlagelements 12 in einer Ebene zur äußeren Oberfläche der Holzwerkstoffplatte 8 anordnen.

Des Weiteren ist es selbstverständlich möglich, den zweiten Teil des Beschlagelements 12 an einem weiteren Element, beispielsweise an einer Tür 18, ebenfalls mit einer Schicht 16 zu verkleben. Zum Verkleben kann dabei wiederum das zuvor erläuterte erfindungsgemäße Verfahren verwendet werden.

Zuvor ist das Verfahren so dargestellt worden, dass das Beschlagelements 12 zunächst in Kontakt mit dem Halzwerkstoffelement 4 gebracht worden ist und anschließend erst das Beschlagelement 12 mit der elektromagnetischen Strahlung beaufschlagt worden ist. Diese Vorgehensweise hat den Vorteil, dass das induktive Erwärmen des Beschlagelements 12 und damit des Klebstoffes erst dann erfolgt, wenn bereits Kontakt mit dem Holzwerkstoffelement 4 besteht. Somit wird das Positionieren des Beschlagelementes 12 auf der Oberfläche des Holzwerkstoffelementes 4 erleichtert, da noch keine oder nur eine geringe Klebkraft vorhanden ist und ein einmaliger Kontakt mit der Oberfläche wieder gelöst werden kann oder ein Verschieben des Beschlagelementes 12 auf der Oberfläche des Holzwerkstoffelements 4 möglich bleibt.

Es ist jedoch auch möglich, das Beschlagelement 12 zunächst induktiv zu erwärmen, bevor es in Kontakt mit dem Holzwerkstoffelement 4 gebracht wird. In diesem Fall kommt der Klebstoff erst dann in Berührung mit der Oberfläche des Holzwerkstoffelements 4, wenn er bereits zumindest teilweise aktiviert worden ist.

## Patentansprüche

1. Verfahren zum Befestigen eines Beschlagelementes an einem Holzwerkstoffelement,
- bei dem die Fügefläche des Beschlagelements zumindest teilweise mit einem Klebstoff versehen wird,
- bei dem die Fügefläche des Beschlagelements mit dem Holzwerkstoffelement in Kontakt gebracht wird,
- bei dem vor oder nach dem Inkontaktbringen mittels magnetischer Induktion Wärmeenergie im Beschlagelement oder im Klebstoff erzeugt wird,
- bei dem der Klebstoff durch die Wärmeenergie erwärmt und aktiviert wird und
- bei dem durch den aushärtenden Klebstoff eine Klebeverbindung zwischen dem Beschlagelement und dem Holzwerkstoffelement erzeugt wird.

2. verfahren nach Anspruch 1,
- bei dem das Beschlagelement aus einem elektrisch leitfähigen Material besteht und durch die magnetische Induktion erwärmt wird und
- bei dem die im Beschlagelement entstehende Wärme auf den Klebstoff übertragen wird.

3. Verfahren nach Anspruch 1,
bei dem der Klebstoff elektrisch leitfähig ist und durch magnetische Induktion erwärmt wird.

4. Verfahren nach Anspruch 1,
bei dem der Klebstoff elektrisch leitfähige Partikel enthält, die durch magnetische Induktion erwärmt werden.

5. Verfahren nach Anspruch 1,
- bei dem der Klebstoff aus einem Reaktionsklebstoff besteht und vor dem Anbringen des Beschlagelements am Holzwerkstoffelement zumindest teilweise vorvernetzt wird und
- bei dem der Klebstoff nach der Erwärmung endausgehärtet wird.

6. Verfahren nach Anspruch 1,
- bei dem der Klebstoff aus einem thermoplastischen Klebstoff besteht und vor dem Anbringen des Beschlagelements am Holzwerkstoffelement zumindest teilweise verfestigt wird und
- bei dem der Klebstoff mittels der Erwärmung zumindest teilweise verflüssigt wird.

7. Verfahren nach einem der Ansprüche 1 bis 6,
bei dem die Oberfläche des Holzwerkstoffelements mindestens im zu verklebenden Bereich durch Aufrauhen, Anschleifen, Glätten und/oder ein anderes Verfahren vorbehandelt wird und/oder ein Primer oder sonstiges Produkt zur Vorbehandlung der Oberfläche aufgetragen wird.

8. Bauteil,
- mit mindestens einem Holzwerkstoffelement (4),
- mit mindestens einem mit dem Holzwerkstoffelement (4) verbundenen Beschlagelement (12) und
- mit einer Klebstoffschicht (16),
- wobei die Klebstoffschicht (16) zwischen dem Holzwerkstoffelement (4) und dem Beschlagelement (12) vorgesehen ist und
- wobei, das Beschlagelement (12) durch den Klebstoff (16) mit dem Holzwerkstoffelement (4) verbunden,
**dadurch gekennzeichnet,**
- **dass** die Klebstoffschicht (16) zumindest teilweise elektrisch leitfähig ist.

9. Bauteil nach Anspruch 8,
**dadurch gekennzeichnet,**
**dass** das Beschlagelement (12) zumindest teilweise aus einem elektrisch leitfähigen Material besteht.

10. Bauteil nach Anspruch 8,
**dadurch gekennzeichnet,**
**dass** die Klebstoffschicht (16) zumindest teilweise aus einem elektrisch leitfähigen Material besteht.

11. Bauteil nach Anspruch 8,
**dadurch gekennzeichnet,**
**dass** der Klebstoff elektrisch leitfähig ist.

12. Bauteil nach Anspruch 8,
**dadurch gekennzeichnet,**
**dass** die Klebstoffschicht (16) eine Mehrzahl von elektrisch leitfähigen Partikeln aufweist.

13. Bauteil nach einem der Ansprüche 8 bis 12,
**dadurch gekennzeichnet,**
**dass** der Klebstoff aus einem Reaktionsklebstoff oder aus einem thermoplastischen Klebstoff besteht.

14. Bauteil nach einem der Ansprüche 8 bis 13,
**dadurch gekennzeichnet,**
**dass** das Holzwerkstoffelement (4) als Leichtbauplatte ausgebildet ist und dass mindestens eine äußere Abdeckplatte (8, 10) vorgesehen ist.

15. Bauteil nach Anspruch 14,
**dadurch gekennzeichnet,**
- **dass** jeweils eine Abdeckplatte (8, 10) eine Ausnehmung aufweist und
- **dass** das Beschlagelement (12) teilweise in der Ausnehmung angeordnet und dort verklebt ist.

16. Bauteil nach einem der Ansprüche 8 bis 15,
**dadurch gekennzeichnet,**
**dass** das Holzwerkstoffelement (4) mit einer Beschichtung versehen ist.

17. Bauteil nach Anspruch 16,
**dadurch gekennzeichnet,**
**dass** die Beschichtung im zu verklebenden Bereich durch Aufrauhen, Anschleifen, Glätten und/oder ein anderes Verfahren vorbehandelt ist und/oder ein Primer oder sonstiges Produkt zur Vorbehandlung der Beschichtung aufgetragen ist.

18. Bauteil nach Anspruch 16 oder 17,
**dadurch gekennzeichnet,**
**dass** die Beschichtung teilweise im zu verklebenden Bereich abgetragen ist.

19. Bauteil nach einem der Ansprüche 16 bis 18,
**dadurch gekennzeichnet,**
**dass** das Beschlagelement (12) mit der Beschichtung verklebt ist.

20. Bauteil nach Anspruch 16,
**dadurch gekennzeichnet,**
**dass** die Beschichtung vollständig im zu verklebenden Bereich abgetragen ist.

21. Beschlagelement zur Verbindung mit einem Holzwerkstoffelement,
- mit einer werkseitig angebrachten Klebstoffschicht,
- wobei das Beschlagelement oder die Klebstoffschicht durch Induktion erwärmbar ist und
- wobei die Klebstoffschicht durch das Erwärmen hinsichtlich dem Entfalten einer Klebekraft aktivierbar ist,
**dadurch gekennzeichnet,**
**dass** die Klebstoffschicht elektrisch leitfähige Partikel aufweist.

22. Beschlagelement nach Anspruch 21,
**dadurch gekennzeichnet,**
**dass** der Klebstoff aus einem Reaktionsklebstoff besteht.

23. Beschlagelements nach Anspruch 21 oder 22,
**dadurch gekennzeichnet,**
**dass** das Beschlagelement elektrisch leitfähige Partikel aufweist.

## Claims

1. Method for fastening a mounting element to a wooden material element,
- in which the joining face of the mounting element is at least partially provided with an adhesive,
- in which the joining face of the mounting element is brought into contact with the wooden material element,
- in which heat energy is generated in the mounting element or in the adhesive by means of magnetic induction before or after the said elements are brought into contact,
- in which the adhesive is heated and activated by the heat energy and
- in which an adhesive connection is produced between the mounting element and the wooden material element by the curing adhesive.

2. Method according to Claim 1,
- in which the mounting element consists of an electrically conductive material and is heated by the magnetic induction and
- in which the heat generated in the mounting element is transferred to the adhesive.

3. Method according to Claim 1,
in which the adhesive is electrically conductive and is heated by magnetic induction.

4. Method according to Claim 1,
in which the adhesive contains electrically conductive particles which are heated by magnetic induction.

5. Method according to Claim 1,
- in which the adhesive consists of a reaction adhesive and is at least partially pre-crosslinked before the application of the mounting element to the wooden material element and
- in which the adhesive is finish-cured after heating.

6. Method according to Claim 1,
- in which the adhesive consists of a thermoplastic adhesive and is at least partially solidified before the application of the mounting element to the wooden material element and
- in which the adhesive is at least partially liquefied by means of the heating.

7. Method according to one of Claims 1 to 6, in which the surface of the wooden material element is pre-treated at least in the region to be adhesively bonded by roughening, sanding, planing and/or another method, and/or a primer or other product is applied for pre-treating the surface.

8. Component,
- with at least one wooden material element (4),
- with at least one mounting element (12) which is connected to the wooden material element (4) and
- with an adhesive layer (16),
- with the adhesive layer (16) being provided between the wooden material element (4) and the mounting element (12) and
- with the mounting element (12) being connected to the wooden material element (4) by means of the adhesive (16),
**characterized in that**
- the adhesive layer (16) is at least partially electrically conductive.

9. Component according to Claim 8,
**characterized in that**
the mounting element (12) consists at least partially of an electrically conductive material.

10. Component according to Claim 8,
**characterized in that**
the adhesive layer (16) consists at least partially of an electrically conductive material.

11. Component according to Claim 8,
**characterized in that**
the adhesive is electrically conductive.

12. Component according to Claim 8,
**characterized in that**
the adhesive layer (16) has a plurality of electrically conductive particles.

13. Component according to one of Claims 8 to 12,
**characterized in that**
the adhesive consists of a reaction adhesive or of a thermoplastic adhesive.

14. Component according to one of Claims 8 to 13,
**characterized**
**in that** the wooden material element (4) is configured as a lightweight building slab and in that at least one outer covering slab (8, 10) is provided.

15. Component according to Claim 14,
**characterized**
- **in that** each covering slab (8, 10) has a recess and
- **in that** the mounting element (12) is arranged partially in the recess and adhesively bonded there.

16. Component according to one of Claims 8 to 15,
**characterized**
**in that** the wooden material element (4) is provided with a coating.

17. Component according to Claim 16,
**characterized**
**in that** the coating is pre-treated in the region to be adhesively bonded by roughening, sanding, planing and/or another method, and/or a primer or other product is applied to pre-treat the coating.

18. Component according to Claim 16 or 17,
**characterized**
**in that** the coating is partially removed in the region to be adhesively bonded.

19. Component according to one of Claims 16 to 18,
**characterized**
**in that** the mounting element (12) is adhesively bonded with the coating.

20. Component according to Claim 16,
**characterized**
**in that** the coating is completely removed in the region to be adhesively bonded.

21. Mounting element for connection to a wooden material element,
- with an adhesive layer which is applied at the factory,
- with it being possible for the mounting element or the adhesive layer to be heated by induction and
- with it being possible to activate the adhesive property of the adhesive layer by heating,
**characterized**
**in that** the adhesive layer has electrically conductive particles.

22. Mounting element according to Claim 21,
**characterized**
**in that** the adhesive consists of a reaction adhesive.

23. Mounting element according to Claim 21 or 22,
**characterized**
**in that** the mounting element has electrically conductive particles.

## Revendications

1. Procédé pour fixer un élément de ferrure sur un élément en matériau dérivé du bois,
- dans lequel la surface d'assemblage de l'élément de ferrure est au moins en partie pourvue d'une colle,
- dans lequel la surface d'assemblage de l'élément de ferrure est amenée en contact avec l'élément en matériau dérivé du bois,
- dans lequel, avant et après la mise en contact, de l'énergie thermique est produite dans l'élément de ferrure ou dans la colle par induction magnétique,
- dans lequel la colle est chauffée et activée par l'énergie thermique et
- dans lequel la colle durcissante produit un assemblage collé entre l'élément de ferrure et l'élément en matériau dérivé du bois.

2. Procédé selon la revendication 1,
- dans lequel l'élément de ferrure est constitué d'un matériau électroconducteur et est chauffé par induction magnétique et
- dans lequel la chaleur formée dans l'élément de ferrure est transmise à la colle.

3. Procédé selon la revendication 1,
dans lequel la colle est électroconductrice et est chauffée par induction magnétique.

4. Procédé selon la revendication 1,
dans lequel la colle contient des particules électroconductrices qui sont chauffées par induction magnétique.

5. Procédé selon la revendication 1,
- dans lequel la colle est constituée d'une colle réactive et est pré-réticulée au moins en partie avant d'appliquer l'élément de ferrure sur l'élément en matériau dérivé du bois et
- dans lequel la colle est soumise à un durcissement final après le chauffage.

6. Procédé selon la revendication 1,
- dans lequel la colle est constituée d'une colle thermoplastique et est solidifiée au moins en partie avant d'appliquer l'élément de ferrure sur l'élément en matériau dérivé du bois et
- dans lequel la colle est au moins en partie liquéfiée par chauffage.

7. Procédé selon l'une quelconque des revendications 1 à 6,
dans lequel on traite préalablement la surface de l'élément en matériau dérivé du bois, au moins dans la zone à coller, par grattage, meulage, polissage et/ou par un autre procédé et/ou l'on applique une couche de fond ou un autre produit pour le traitement préalable de la surface.

8. Pièce de construction, comprenant :
- au moins un élément en matériau dérivé du bois (4),
- au moins un élément de ferrure (12) raccordé à l'élément de matériau dérivé du bois (4) et
- une couche de colle (16),
- dans laquelle la couche de colle (16) est ménagée entre l'élément en matériau dérivé du bois (4) et l'élément de ferrure (12) et
- dans laquelle l'élément de ferrure (12) est raccordé par la colle (16) à l'élément en matériau dérivé du bois (4), **caractérisée en ce que**,
- la couche de colle (16) est au moins en partie électroconductrice.

9. Pièce de construction selon la revendication 8,
**caractérisée en ce que**
l'élément de ferrure (12) est constitué au moins en partie d'un matériau électroconducteur.

10. Pièce de construction selon la revendication 8,
**caractérisée en ce que**
la couche de colle (16) est constituée au moins en partie d'un matériau électroconducteur.

11. Pièce de construction selon la revendication 8,
**caractérisée en ce que**
la colle est électroconductrice.

12. Pièce de construction selon la revendication 8,
**caractérisée en ce que**
la couche de colle (16) présente une pluralité de particules électroconductrices.

13. Pièce de construction selon l'une quelconque des revendications 8 à 12,
**caractérisée en ce que**
la colle est constituée d'une colle réactive ou d'une colle thermoplastique.

14. Pièce de construction selon l'une quelconque des revendications 8 à 13,
**caractérisée en ce que**
l'élément en matériau dérivé du bois (4) se présente sous la forme d'un panneau léger et **en ce que** l'on prévoit au moins une plaque de recouvrement externe (8, 10).

15. Pièce de construction selon la revendication 14,
**caractérisée en ce que**
- respectivement une plaque de recouvrement (8, 10) présente un évidement et
- l'élément de ferrure (12) est agencé en partie dans l'évidement et y est collé.

16. Pièce de construction selon l'une quelconque des revendications 8 à 15,
**caractérisée en ce que**
l'élément en matériau dérivé du bois (4) est pourvu d'un revêtement.

17. Pièce de construction selon la revendication 16,
**caractérisée en ce que**
l'on traite préalablement le revêtement, dans la zone à coller, par grattage, meulage, polissage et/ou un autre procédé et/ou l'on applique une couche de fond ou un autre produit pour traiter préalablement le revêtement.

18. Pièce de construction selon la revendication 16 ou 17,
**caractérisée en ce que**
le revêtement est en partie enlevé dans la zone à coller.

19. Pièce de construction selon l'une quelconque des revendications 16 à 18,
**caractérisée en ce que**
l'élément de ferrure (12) est collé au revêtement.

20. Pièce de construction selon la revendication 16,
**caractérisée en ce que**
le revêtement est complètement enlevé dans la zone à coller.

21. Elément de ferrure à raccorder à un élément en matériau dérivé du bois, comprenant :
- une couche de colle appliquée à l'usine,
- dans lequel l'élément de ferrure ou la couche de colle peut être chauffé(e) par induction et
- dans lequel on peut activer la couche de colle par chauffage de manière à développer une force adhésive.
**caractérisé en ce que**
la couche de colle présente des particules électroconductrices.

22. Elément de ferrure selon la revendication 21,
**caractérisé en ce que**
la colle est constituée d'une colle réactive.

23. Elément de ferrure selon la revendication 21 ou 22,
**caractérisé en ce que**
l'élément de ferrure présente des particules électroconductrices.
